# EUROPEAN PATENT APPLICATION

(11) **EP 4 697 488 A1**
(43) Date of publication of application: **18.02.2026**
(21) Application number: 24863114.5
(22) Date of filing: 28.08.2024
(51) Int. Cl.: H01M 50/552, H01M 50/531, H01M 50/562, H01M 50/564, H01M 50/147, H01M 50/502, H01M 50/141, H01M 10/04, H01M 50/148

(54) **SECONDARY BATTERY, MANUFACTURING METHOD THEREOF, AND BATTERY PACK**

(30) Priority: 05.09.2023 KR 20230117851; 31.05.2024 KR 20240071802; 05.08.2024 KR 20240104209
(71) Applicant: LG Energy Solution, Ltd., Seoul 07335 (KR)
(72) Inventor: LEE, Ji Sun, Daejeon 34122 (KR); KIM, Sang Hun, Daejeon 34122 (KR); LEE, Jae Ho, Daejeon 34122 (KR); CHOI, Ji Eun, Daejeon 34122 (KR)
(74) Representative: Goddar, Heinz J.
(86) International application number: PCT/KR2024/012879
(87) International publication number: WO 2025/053533

(57) **Abstract**

The present disclosure relates to a secondary battery that has improved battery capacity while simultaneously having fewer restrictions on shape, may reduce the amount of moisture introduced from the outside, and has improved structural stability.

A secondary battery according to the present disclosure may include an electrode assembly, an outer film surrounding a portion of the electrode assembly, and a cap surrounding the remainder of the electrode assembly, wherein the cap may include a connection portion coupled to the outer film, a terminal portion partially embedded in the connection portion, and an outer surface portion covering at least a portion of an outer surface of the terminal portion facing the outside of the electrode assembly.

## Description

### TECHNICAL FIELD

### CROSS-REFERENCE TO RELATED APPLICATIONS

The present application claims priority to Korean Patent Application No. 10-2024-0104209 filed on August 5, 2024, Korean Patent Application No. 10-2024-0071802 filed on May 31, 2024, and Korean Patent Application No. 10-2023-0117851 filed on September 5, 2023 in the Republic of Korea, the disclosures of which are incorporated herein by reference.

### TECHNICAL FIELD

The present disclosure relates to a secondary battery, and more specifically, to a secondary battery that can be charged and discharged, a method for manufacturing the same, and a battery pack.

### BACKGROUND ART

Recently, the depletion of fossil fuels forces to increase the price of energy sources and has strong impact on the growing attention towards environmental pollution, and the need for eco-friendly alternative energy sources is an essential factor for future life. In this context, a variety of energy generation technologies including solar energy, wind energy, tidal energy and the like are being studied, and attention is directed to energy storage systems such as batteries to make use of the produced electrical energy more efficiently.

Moreover, as the technology development and demand for electronic mobile devices and electric vehicles using batteries increase, the demand for batteries as an energy source is rapidly increasing, and accordingly, many studies are being conducted on batteries that meet a variety of needs.

Batteries that store electrical energy may be generally divided into primary batteries and secondary batteries. Primary batteries are disposable consumable batteries, whereas secondary batteries are rechargeable batteries manufactured using materials in which the oxidation and reduction processes between current and substances are repeatable. That is, when a reduction reaction is performed on a material by current, the power is charged, and when an oxidation reaction is performed on a material, the power is discharged, and electricity is generated while such charging and discharging are repeatedly performed.

Secondary batteries may be classified into cylindrical cells, pouch cells, prismatic cells, and the like according to their shapes. Among them, pouch cells may be manufactured in a form where an electrode assembly in which a positive electrode, a negative electrode, and a separator are stacked is accommodated inside the pouch, and the outer part of the pouch is sealed.

Secondary batteries may be classified into cylindrical cells, pouch cells, prismatic cells, and the like according to their shapes. Among them, pouch cells may be manufactured in a form where an electrode assembly in which a positive electrode, a negative electrode, and a separator are stacked is accommodated inside the pouch, and the outer part of the pouch is sealed.

Conventional pouch cells have a problem that cracks occur in the pouch film during the molding process of the pouch film, and many pouch films are discarded after the degassing process. Additionally, the depth that can be molded is limited depending on the material properties of the pouch film, and accordingly, there is a limit to an increase in battery capacity.

Therefore, there is a need for a secondary battery having a form that may improve battery capacity while having relatively fewer restrictions on shape.

### SUMMARY

### TECHNICAL PROBLEM

The present disclosure is directed to providing a secondary battery that has improved battery capacity while simultaneously having fewer restrictions on shape, may reduce the amount of moisture introduced from the outside, and has improved structural stability.

### TECHNICAL SOLUTION

A secondary battery according to the present disclosure may include an electrode assembly, an outer film surrounding a portion of the electrode assembly, and a cap surrounding the remainder of the electrode assembly, wherein the cap may include a connection portion coupled to the outer film, a terminal portion partially embedded in the connection portion, and an outer surface portion covering at least a portion of an outer surface of the terminal portion facing the outside of the electrode assembly.

The terminal portion may include a first member exposed to the outside of the connection portion, and a second member extending from the first member toward the electrode assembly.

The outer surface portion may cover the outer surface of the first member.

The second member may be provided so that one end on the electrode assembly side is exposed to the inside of the connection portion.

The second member may be formed in plurality, and at least one of the second members may be provided so that one end on the electrode assembly side is exposed to the inside of the connection portion.

The secondary battery may further include a busbar that is disposed between the terminal portion and the electrode assembly and connects one end of the second member exposed to the inside of the connection portion and the electrode assembly to each other.

The second member may extend from the side of the first member toward the electrode assembly and may be embedded in the connection portion so as to be covered by the connection portion, wherein the terminal portion may further include a third member extending from the first member toward the electrode assembly and provided to penetrate the connection portion so as to be exposed to the inside of the connection portion.

The secondary battery may further include a busbar that is disposed between the terminal portion and the electrode assembly and connects the third member exposed to the inside of the connection portion and the electrode assembly to each other.

The busbar may include a first metal portion in contact with the third member, and a second metal portion extending from the first metal portion toward the electrode assembly and having one end thereof connected to the electrode assembly.

In the outer surface portion, a hole may be formed so that the outer surface of the terminal portion may be exposed to the outside.

The terminal portion may include a terminal member penetrating the outer surface portion.

An end of the terminal member may protrude outward from the outer surface portion.

The terminal portion may be disposed so that one surface thereof protrudes from one surface of the connection portion in a direction away from the electrode assembly.

The terminal portion may be at least partially embedded in the connection portion.

The terminal portion may include a first member exposed to the outside of the connection portion, and a second member extending from the first member toward the electrode assembly and embedded in the connection portion.

A method for manufacturing the secondary battery according to an embodiment of the present disclosure may include a step of providing an electrode assembly including a positive electrode and a negative electrode, a step of surrounding a portion of the electrode assembly with an outer film, and a step of covering the remainder of the electrode assembly with a cap, wherein the cap may include a connection portion coupled to the outer film, a terminal portion partially embedded in the connection portion, and an outer surface portion covering at least a portion of an outer surface of the terminal portion facing the outside of the electrode assembly, wherein the terminal portion may be at least partially embedded in the connection portion.

A battery pack according to an embodiment of the present disclosure may include a plurality of secondary batteries described above and a packaging that accommodates the plurality of secondary batteries.

### ADVANTAGEOUS EFFECTS

A secondary battery according to a preferred embodiment of the present disclosure has no process for molding an outer film, so that there are fewer restrictions on the form in which the outer film accommodates the electrode assembly, the possibility of defects such as cracks in the outer film is reduced, and the battery capacity may be improved.

Additionally, the degree of penetration of moisture or the like from the outside of the secondary battery to the inside of the secondary battery may be reduced, thereby improving the safety of the secondary battery.

Additionally, the terminal portion may be electrically connected to the electrode assembly in various forms by the busbar.

Additionally, the structural stability of the secondary battery may be improved by the coupling relation and arrangement form of the terminal portion and the connection portion.

Additionally, the terminal portion may be protected from external impact or contamination by the outer surface portion.

Additionally, the terminal portion and the connection portion are coupled to each other, so that the coupling properties between the terminal portion and the connection portion may be improved.

Additionally, since the terminal portion is covered by the outer surface portion, the insulation between the terminal portion and other configurations may be improved, and thermal propagation may be suppressed in a thermal runaway situation.

Additionally, since the terminal portion is surrounded by the outer surface portion and the connection portion, the cap may be easily manufactured by an insert injection process. In addition, since the terminal portion is at least partially embedded in the connection portion, the structural stability of the cap may be improved.

The effects according to the present disclosure are not limited by the contents exemplified above, and more various effects are included in this specification.

### BRIEF DESCRIPTION OF THE DRAWINGS

FIG. 1 is a perspective view schematically showing a secondary battery according to Embodiment 1 of the present disclosure.
FIG. 2 is an exploded perspective view schematically showing a secondary battery according to Embodiment 1 of the present disclosure.
FIG. 3 is a cross-sectional view schematically showing a cross-section of a cap of a secondary battery according to Embodiment 1 of the present disclosure taken along line A-A' of FIG. 2.
FIG. 4 is a cross-sectional view schematically showing a modified example of the cap according to FIG. 3.
FIG. 5 is a cross-sectional view schematically showing a cap and a busbar of a secondary battery according to Embodiment 2 of the present disclosure.
FIG. 6 is a cross-sectional view schematically showing a modified example of the cap according to FIG. 5.
FIG. 7 is a cross-sectional view schematically showing another modified example of the cap according to FIG. 3.
FIG. 8 is a cross-sectional view schematically showing still another modified example of the cap according to FIG. 3.
FIG. 9 is an exploded perspective view schematically showing a battery pack according to Embodiment 5 of the present disclosure.

### DETAILED DESCRIPTION

Hereinafter, preferred embodiments of the present disclosure will be described in sufficient detail with reference to the accompanying drawings to enable those having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the present disclosure.

Additionally, it should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

### Embodiment 1

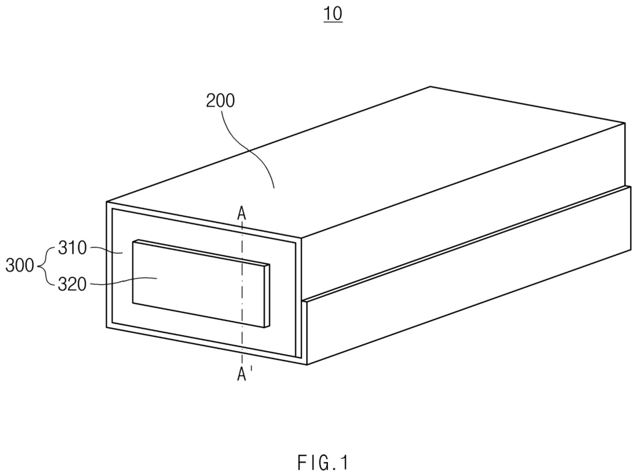

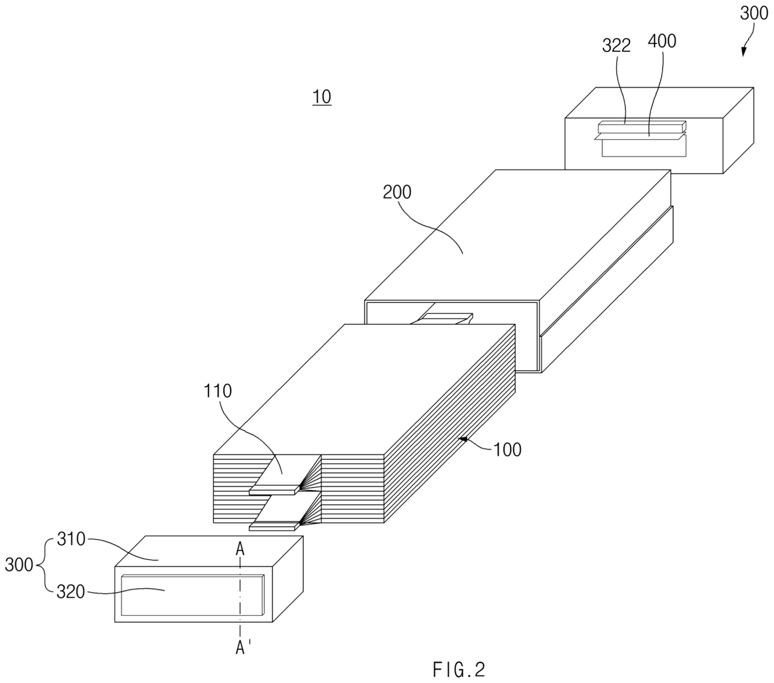

FIG. 1 is a perspective view schematically showing a secondary battery 10 according to Embodiment 1 of the present disclosure, and FIG. 2 is an exploded perspective view schematically showing a secondary battery 10 according to Embodiment 1 of the present disclosure.

The secondary battery 10 according to Embodiment 1 of the present disclosure may include an electrode assembly 100, an outer film 200, and a cap 300. Hereinafter, each configuration of the secondary battery 10 will be described in more detail. For reference, the contents of Embodiment 1 may be equally applied to the embodiments to be described later, as long as they do not conflict with each other.

The electrode assembly 100 of the secondary battery 10 may include a positive electrode, a negative electrode, and a separator. Here, the separator may be disposed between the positive electrode and the negative electrode to physically separate the positive electrode and the negative electrode. The electrode assembly 100 may have a form in which the positive electrode, the negative electrode, and the separator are stacked, or a jellyroll form in which the positive electrode, the negative electrode, and the separator are wound.

Meanwhile, the electrode assembly 100 may have an electrode tab 110 connected to the electrode. The electrode tab 110 may be provided separately, or may be provided as part of a current collector constituting the electrode. For reference, when the electrode assembly 100 is an all-solid-state battery, a solid electrolyte may be provided instead of a separator.

Referring to FIG. 2, the secondary battery 10 according to Embodiment 1 of the present disclosure may include an outer film 200. The outer film 200 of the secondary battery 10 may be provided to surround a portion of the electrode assembly 100. Specifically, the outer film 200 may be provided to surround a cap 300 to be described later and the electrode assembly 100. More specifically, the outer film 200 may be coupled to the cap 300 to form an internal space, and the electrode assembly 100 may be accommodated in the internal space.

In order to surround the electrode assembly 100, the outer film 200 may be made of a material that can be deformed in shape. For example, the outer film 200 may be bendable.

Additionally, the outer film 200 may be made of an unstretchable material. In the past, a pouch film was molded to form a space for accommodating the electrode assembly. However, since the outer film 200 does not need to change shape through molding, it may be made of an unstretchable material. That is, the outer film 200 may be unstretchable.

The outer film 200 of the secondary battery 10 may have a shape in which a sheet or film is rolled along the side surface of the electrode assembly 100. That is, the outer film 200 may be disposed to surround the side of the electrode assembly 100. In this case, the outer film 200 may be disposed such that one end and the other end of the outer film 200 meet each other and surround the electrode assembly 100. Regarding the form in which one end and the other end of the outer film 200 meet each other, it is possible that one surface of one end and the other surface of the other end are coupled to contact each other (see FIG. 2), and it is also possible that one surface of one end and one surface of the other end are coupled to contact each other. This is merely an example, and the form in which one end and the other end of the outer film 200 are coupled to form a space for accommodating the electrode assembly 100 may vary.

Regarding the method in which one end and the other end of the outer film 200 are coupled, one end and the other end of the outer film 200 may be coupled to each other by sealing by heat or sealing by heat and pressure. That is, the outer film 200 may include a material having sealing properties by heat. Specifically, the outer film 200 may include a material that melts by heat and has adhesive properties.

For example, the outer film 200 may include a sealant layer, a barrier layer, and an insulating layer.

The sealant layer may include one or more materials selected from the group consisting of polyethylene, polypropylene, polycarbonate, polyethylene terephthalate, polyvinyl chloride, acrylic polymers, polyacrylonitrile, polyimide, polyamide, cellulose, aramid, nylon, polyester, polyparaphenylene benzobisoxazole, polyarylate, Teflon, and glass fiber. Mainly, polyolefin-based resins such as polypropylene (PP) or polyethylene (PE) may be used. In particular, polypropylene (PP) may have excellent mechanical properties such as tensile strength, rigidity, surface hardness, wear resistance, heat resistance, and the like, and chemical properties such as corrosion resistance and the like. The barrier layer may include one or more materials selected from the group consisting of iron (Fe), carbon (C), chromium (Cr), manganese (Mn), nickel (Ni), aluminum (Al), stainless steel (STS), and alloys thereof.

The insulating layer may include one or more materials selected from the group consisting of polyethylene, polypropylene, polycarbonate, polyethylene terephthalate, polyvinyl chloride, acrylic polymers, polyacrylonitrile, polyimide, polyamide, cellulose, aramid, nylon, polyester, polyparaphenylene benzobisoxazole, polyarylate, Teflon, and glass fiber.

Meanwhile, the outer film 200 may be disposed to surround a portion of the electrode assembly 100, and the cap 300 may be disposed to surround the remainder of the electrode assembly 100. Specifically, when the outer film 200 is disposed to surround the electrode assembly 100 along the side surface of the electrode assembly 100, outer material openings may be formed at both ends of the electrode assembly 100. The cap 300 of the secondary battery 10 is coupled to the outer film 200 in a form that covers the outer material openings at both ends of the electrode assembly 100, and the electrode assembly 100 may be accommodated in the internal space formed by the outer film 200 and the cap 300.

As an example of the method of coupling the cap 300 and the outer film 200, the cap 300 and the outer film 200 may be coupled by welding. Specifically, the connection portion 310 may include a metal material, and the outer film 200 may include a metal layer that may be coupled to the connection portion 310 by welding at a portion facing the connection portion 310.

As another example of the method of coupling the cap 300 and the outer film 200, the cap 300 and the outer film 200 may be coupled by sealing. Specifically, the connection portion 310 may include a resin material having adhesiveness by heat, and the outer film 200 may include a resin layer that may be coupled to the connection portion 310 by heat and pressure at a portion facing the connection portion 310. Here, the resin layer may include a material having sealing properties by heat described above.

In the conventional pouch cell, a sheet or film was molded to form a cup portion for accommodating the electrode assembly 100. During the molding process of the cup portion, the depth that can be molded was limited depending on the material properties of the sheet or film, and the capacity to accommodate the electrode assembly 100 was also limited. Additionally, when molding a sheet or film, the thickness at the corner was the thinnest, and defects such as cracks frequently occurred. In addition, conventional pouch cells required a gas capturing unit to capture gas in a degassing process for removing gas accumulated inside the pouch, and there were many parts of the gas capturing unit that were removed and discarded after the degassing process.

In contrast, in the secondary battery 10 according to Embodiment 1 of the present disclosure, the outer film 200 may be used to fit the volume of the electrode assembly 100, so that there may be no limitation on the capacity to accommodate the electrode assembly 100. Additionally, since molding of the cup portion is not required, defects such as cracks may be prevented from occurring in the outer film 200, and the material and thickness of the outer film 200 may be selected relatively freely. In addition, since the electrolyte injection and degassing process may be performed through the cap 300, the outer film 200 may not be discarded, thereby improving the economic efficiency of the process.

Meanwhile, although not described in detail in the present disclosure, the cap 300 may further include an electrolyte inlet for injecting an electrolyte, a gas outlet for discharging gas during the degassing process, or the like.

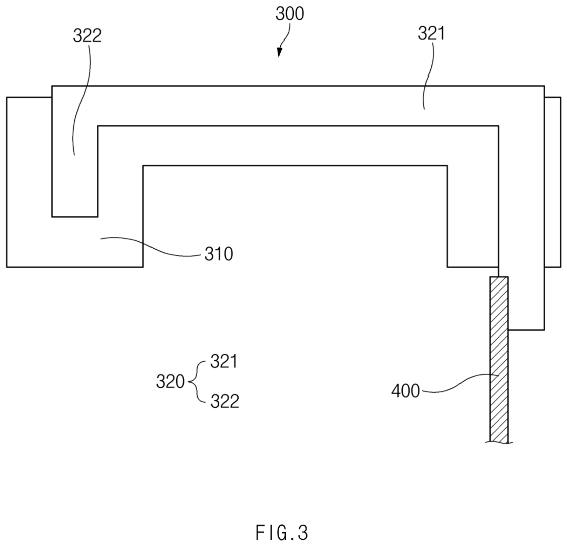

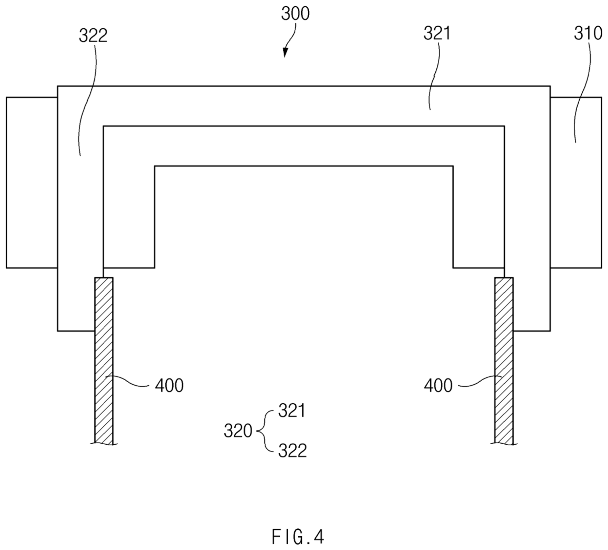

FIG. 3 is a cross-sectional view schematically showing a portion of a cross-section of a secondary battery 10 according to Embodiment 1 of the present disclosure taken along line A-A' of FIG. 2, and FIG. 4 is a cross-sectional view schematically showing a modified example of the cap 300 according to FIG. 3.

Referring to FIG. 3, the cap 300 of the secondary battery 10 according to Embodiment 1 of the present disclosure may include a connection portion 310 and a terminal portion 320.

The connection portion 310 of the cap 300 may be coupled to the outer film 200. Additionally, the terminal portion 320 of the cap 300 may be coupled to the connection portion 310 and may be provided to be exposed to the outside and inside of the connection portion 310, respectively. Here, the inside of the connection portion 310 may mean a portion of the internal space formed by the cap 300 and the outer film 200, and the outside of the connection portion 310 may mean the outer space of the cap 300 and the outer film 200. Meanwhile, a portion of the terminal portion 320 exposed to the inside of the connection portion 310 may be electrically connected to the electrode assembly 100. In this case, the electrical connection may include both a direct connection of the terminal portion 320 and the electrode assembly 100 and an indirect connection via another electrically conductive member.

Meanwhile, as an example of a method of coupling the connection portion 310 and the terminal portion 320, coupling by sealing is possible. The terminal portion 320 may include a metal material, and the connection portion 310 may include a resin material having adhesiveness by heat. Therefore, the resin material of the connection portion 310 that has adhesiveness by heat may melt and be coupled to the terminal portion 320 by pressure.

As an example of a configuration for improving the structural stability of the cap 300, the terminal portion 320 of the cap 300 according to Embodiment 1 of the present disclosure may be at least partially embedded in the connection portion 310. In this regard, the terminal portion 320 of the cap 300 may include a first member 321 and a second member 322.

The first member 321 of the terminal portion 320 may be provided to be partially exposed to the outside of the connection portion 310. Therefore, the terminal portion 320 electrically connected to the electrode assembly 100 may be in electrical contact with the outside through the first member 321 provided to be exposed to the outside of the connection portion 310. That is, the secondary battery 10 may provide electrical energy to the outside through the first member 321.

The second member 322 of the terminal portion 320 may extend toward the electrode assembly 100. That is, the second member 322 may extend from the first member 321 toward the electrode assembly 100. Specifically, the second member 322 may be provided so that one end on the electrode assembly 100 side is exposed to the inside of the connection portion 310. Here, the inside of the connection portion 310 may mean a portion of the internal space formed by the outer film 200 and the cap 300.

Referring to FIG. 3, the second member 322 of the terminal portion 320 may be formed in plurality. Additionally, at least one second member 322 may be provided so that one end on the electrode assembly 100 side is exposed to the inside of the connection portion 310. Specifically, among the plurality of second members 322 extending from the first member 321 toward the electrode assembly 100, some may be embedded in the connection portion 310, and some may be exposed to the inside of the connection portion 310. Based on FIG. 3, the second member 322 shown on the left may be embedded in the connection portion 310, and the second member 322 shown on the right may be exposed to the inside of the connection portion 310.

The second member 322 extending to the inside of the connection portion 310 may have one end on the electrode assembly 100 side electrically connected to the electrode assembly 100. Here, the electrical connection may include both a direct connection between the second member 322 and the electrode assembly 100 and an indirect connection via another electrically conductive member.

When the second member 322 and the electrode assembly 100 are directly connected, the electrode tab 110 of the electrode assembly 100 may be connected to the second member 322. Additionally, when the second member 322 and the electrode assembly 100 are indirectly connected, the secondary battery 10 may include a busbar 400 as an example of an electrically conductive member serving as an intermediary.

The busbar 400 is disposed between the terminal portion 320 and the electrode assembly 100 and may connect one end of the second member 322 exposed to the inside of the connection portion 310 and the electrode assembly 100 to each other. The busbar 400 may be made of metal to have electrical conductivity. Additionally, the busbar 400 may be disposed in various forms depending on the extending length of the second member 322 or the like. FIG. 3 is a drawing showing a case in which the busbar 400 according to Embodiment 1 of the present disclosure has a roughly plate or rod shape.

Meanwhile, according to a modified example of Embodiment 1 of the present disclosure, all the second member 322 may be provided so that one end on the electrode assembly 100 side is exposed to the inside of the connection portion 310. Specifically, a plurality of second members 322 extending from the first member 321 toward the electrode assembly 100 may all be exposed to the inside of the connection portion 310.

As described above, when the second member 322 and the electrode assembly 100 are directly connected, the electrode tab 110 of the electrode assembly 100 may be connected to the second member 322. Additionally, when the second member 322 and the electrode assembly 100 are indirectly connected, the secondary battery 10 may include a plurality of busbars 400 as an example of an electrically conductive member serving as an intermediary.

Referring to FIG. 4, each of the plurality of busbars 400 of the secondary battery 10 according to a modified example may be connected to the second member 322 on the inside of the connection portion 310. In this case, the electrode assembly 100 may be electrically connected to the second member 322 at a plurality of locations. Therefore, when the secondary battery 10 includes a plurality of electrode assemblies 100, the plurality of electrode assemblies 100 may be electrically connected to the busbars 400 disposed at each of nearby locations. Accordingly, the secondary battery 10 may efficiently increase the battery capacity.

Meanwhile, the cap 300 according to Embodiment 1 of the present disclosure may be disposed so that one surface of the terminal portion 320 protrudes from one surface of the connection portion 310 in a direction away from the electrode assembly 100. Specifically, one surface of the first member 321 may be disposed to protrude further outward from the connection portion 310 than one surface of the connection portion 310. Based on FIGS. 3 or 4, one surface of the first member 321 and one surface of the connection portion 310 may mean the upper surfaces of each. In this case, an object intended to obtain electrical energy may easily contact the protruding first member 321.

As another example related to the arrangement form of the first member 321, one surface of the first member 321 may be disposed on the same plane as one surface of the connection portion 310. In this case, since there is no part of the first member 321 protruding outward from the connection portion 310, the arrangement may be easy when disposing multiple secondary batteries 10.

The cap 300 of the secondary battery 10 according to Embodiment 1 of the present disclosure may cover the electrode assembly 100 with the connection portion 310 and the terminal portion 320 at least partially embedded in the connection portion 310. Depending on the material of the connection portion 310, moisture or the like outside the connection portion 310 may penetrate into the connection portion 310 therethrough. The penetration of moisture may cause a defect in the secondary battery 10. In the cap 300 of the secondary battery 10 according to Embodiment 1 of the present disclosure, the terminal portion 320 made of metal may cover the electrode assembly 100 together with the connection portion 310, thereby reducing the area of the connection portion 310 through which moisture may penetrate. Additionally, since the terminal portion 320 is disposed to be at least partially embedded in the connection portion 310, the moisture penetration path formed between the terminal portion 320 and the connection portion 310 may be in a shape in which moisture is difficult to penetrate. Therefore, the secondary battery 10 according to Embodiment 1 of the present disclosure may reduce the amount of moisture penetrating into the inside, thereby reducing the phenomenon in which problems occur in the performance of the secondary battery 10.

Additionally, the cap 300 of the secondary battery 10 according to Embodiment 1 of the present disclosure may be disposed in a state where the second member 322 of the terminal portion 320 is embedded in the connection portion 310. Therefore, since the connection portion 310 restricts the movement of the terminal portion 320 to prevent the separation of the terminal portion 320, the structural stability of the secondary battery 10 may be improved.

Although not described in detail in Embodiment 1 of the present disclosure, the cap 300 may further include a gas discharge member (not shown) for discharging gas inside the secondary battery 10, a venting member (not shown) for inducing venting to be performed in a specific direction, or the like.

### Embodiment 2

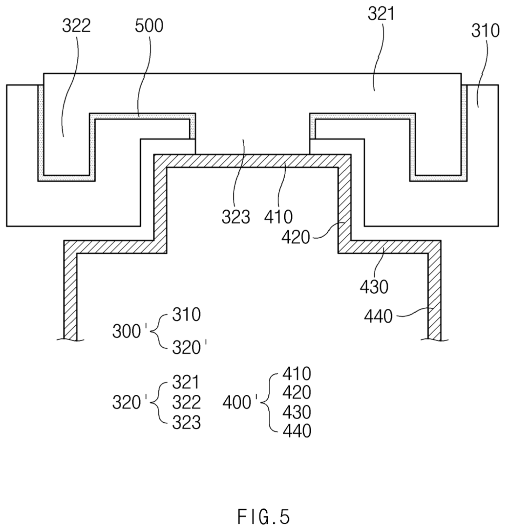

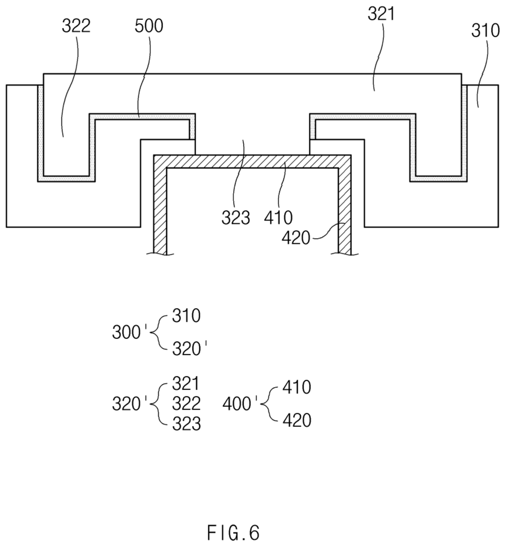

FIG. 5 is a cross-sectional view schematically showing a cap 300' and a busbar 400' of a secondary battery 10 according to Embodiment 2 of the present disclosure, and FIG. 6 is a cross-sectional view schematically showing a modified example of the cap 300' according to FIG. 5.

Hereinafter, a detailed description of the same configuration as the configuration of the secondary battery 10 according to Embodiment 1 of the present disclosure will be omitted, and differences will be mainly described in detail. The secondary battery 10 according to Embodiment 2 of the present disclosure may differ from the secondary battery 10 according to Embodiment 1 in the shape of the terminal portion 320', the shape of the busbar 400', the coupling method of the configuration, and the like.

The secondary battery 10 according to Embodiment 2 of the present disclosure may include an electrode assembly 100, an outer film 200, and a cap 300'. The outer film 200 of the secondary battery 10 may be provided to surround a portion of the electrode assembly 100. Specifically, the outer film 200 may be provided to surround a cap 300' and the electrode assembly 100. More specifically, the outer film 200 may be coupled to the cap 300' to form an internal space, and the electrode assembly 100 may be accommodated in the internal space.

The cap 300' of the secondary battery 10 may include a connection portion 310 and a terminal portion 320'. The connection portion 310 of the cap 300' may be coupled to the outer film 200, and the terminal portion 320' of the cap 300' may be coupled to the connection portion 310 and may be provided to be exposed to the outside and inside of the connection portion 310, respectively. Here, the inside of the connection portion 310 may mean a portion of the internal space formed by the cap 300' and the outer film 200, and the outside of the connection portion 310 may mean the outer space of the cap 300' and the outer film 200. Meanwhile, a portion of the terminal portion 320' exposed to the inside of the connection portion 310 may be electrically connected to the electrode assembly 100.

As an example of a configuration for efficient electrical connection with the electrode assembly 100, the terminal portion 320' of the cap 300' according to Embodiment 2 of the present disclosure may further include a third member 323.

Referring to FIG. 5, the third member 323 of the terminal portion 320' may extend from the first member 321 toward the electrode assembly 100. Specifically, the third member 323 may be provided to penetrate the connection portion 310 so as to be exposed to the inside of the connection portion 310. Preferably, the third member 323 may have a shape extending from the center of a surface of the first member 321 facing the electrode assembly 100 toward the electrode assembly 100. Depending on the form of the third member 323, the busbar 400' to be described later may be disposed in various forms, and structural stability may be improved by increasing the contact area between the third member 323 and the busbar 400'.

Meanwhile, since the third member 323 is electrically connected to the electrode assembly 100, the second member 322 may be disposed in a form where it is entirely embedded in the connection portion 310. Here, the second member 322 may extend from the side of the first member 321 toward the electrode assembly 100. Preferably, the second member 322 may be formed along the border of the first member 321. Since the second member 322 formed along the border of the first member 321 is disposed in a state where it is entirely embedded in the connection portion 310, the structural stability of the cap 300' may be improved. In this case, a path in which moisture is relatively difficult to penetrate is formed between the connection portion 310 and the terminal portion 320' to efficiently prevent moisture from penetrating toward the interior of the secondary battery 10. This is merely an example, and the second member 322 may be formed only at a pair of facing edges among the four edges of the first member 321 having a roughly rectangular cross-section.

As an example of a configuration for electrically connecting the third member 323 and the electrode assembly 100, the secondary battery 10 according to Embodiment 2 of the present disclosure may further include a busbar 400'. Specifically, the busbar 400' may be disposed between the terminal portion 320' and the electrode assembly 100 to connect the third member 323 exposed to the inside of the connection portion 310 and the electrode assembly to each other.

As an example of a configuration for efficient connection with the third member 323, the busbar 400' according to Embodiment 2 of the present disclosure may include a first metal portion 410, a second metal portion 420, a third metal portion 430, and a fourth metal portion 440.

Referring to FIG. 5, the first metal portion 410 may be in contact with the third member 323. For example, the first metal portion 410 may have a roughly plate shape and may extend parallel to the extension direction of the first member 321. Additionally, the first metal portion 410 may be disposed so that a surface facing the third member 323 may be in contact with the third member 323. In this case, the third member 323 includes a metal material, and the third member 323 and the first metal portion 410 may be coupled to each other through welding.

The second metal portion 420 may extend from the first metal portion 410 toward the electrode assembly 100. In this case, the second metal portion 420 may extend in a direction roughly orthogonal to the extension direction of the first metal portion 410.

The third metal portion 430 may extend from the second metal portion 420 toward the outer film 200. In this case, the third metal portion 430 may extend in a direction roughly orthogonal to the extension direction of the second metal portion 420. Specifically, the third metal portion 430 may extend in a direction away from the third member 323.

The fourth metal portion 440 may extend from the third metal portion 430 toward the electrode assembly 100. Additionally, one end of the fourth metal portion 440 may be connected to the electrode assembly 100. Specifically, one end of the fourth metal portion 440 may be connected to the electrode tab 110 of the electrode assembly 100.

The busbar 400' including the first metal portion 410, the second metal portion 420, the third metal portion 430, and the fourth metal portion 440 may be changed into various shapes depending on the number, arrangement, form, and the like of the electrode assembly 100.

Referring to FIG. 6, the busbar 400' according to a modified example of Embodiment 2 of the present disclosure may be composed of a first metal portion 410 and a second metal portion 420. Here, one end of the second metal portion 420 may be connected to the electrode assembly 100. In this case, the busbar 400' may be disposed in a space formed on the inside of the connection portion 310 by the connection portion 310. Therefore, when the electrode assembly 100 is disposed, space efficiency may be improved, and battery capacity may be improved.

Meanwhile, an adhesive 500 may be used as a configuration for coupling between the connection portion 310 and the terminal portion 320'. That is, the connection portion 310 and the terminal portion 320' may be coupled to each other by the adhesive 500 applied between the connection portion 310 and the terminal portion 320'. Additionally, the connection portion 310 and the outer film 200 may also be coupled to each other by the adhesive 500 applied between the connection portion 310 and the outer film 200. Here, the type and application form of the adhesive 500 for coupling may vary. Preferably, the adhesive 500 may be composed of a material having relatively high hydrophobicity.

### Embodiment 3

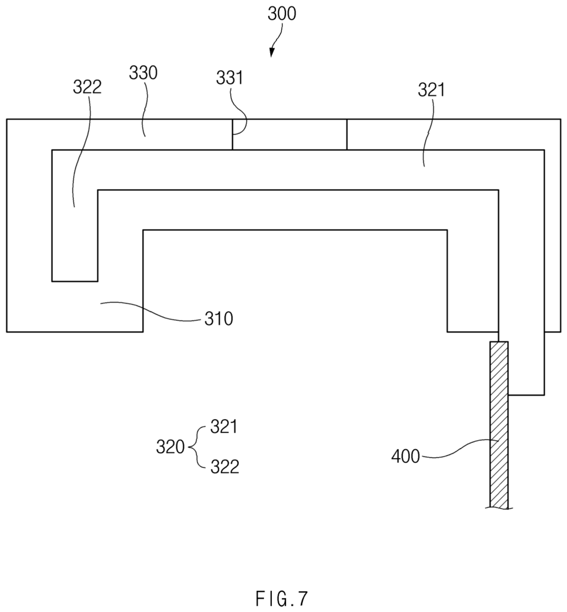

FIG. 7 is a cross-sectional view schematically showing a cap 300 and a busbar 400 of a secondary battery according to Embodiment 3 of the present disclosure. The connection portion 310, the terminal portion 320 of the cap 300, and the busbar 400 according to this embodiment may be configured to be the same as the connection portion, the terminal portion, and the busbar of the embodiment shown in FIG. 3, respectively.

Referring to FIG. 7, in this embodiment, the cap 300 may further include an outer surface portion 330. The outer surface portion 330 is configured to cover an outer surface of the terminal portion 320 facing the outside of the electrode assembly (hereinafter, referred to as the outer surface). As a result, the outer surface of the terminal portion 320 may be protected from external impact or contamination.

In this case, the outer surface portion 330 may be connected to the connection portion 310. In other words, the outer surface portion 330 may be provided integrally with the connection portion 310. The outer surface portion 330 may be made of the same material as the connection portion 310. This may improve the coupling properties between the terminal portion 320 and the connection portion 310.

Meanwhile, in this embodiment, the outer surface portion 330 may cover at least a portion of the outer surface. Here, covering at least a portion of the surface may include covering a region of the surface and covering the entire surface.

In this embodiment, the outer surface may be provided in the terminal portion 321. Based on FIG. 7, the outer surface may be a surface facing upward among the outer surfaces of the first member 321. In this embodiment, the outer surface portion 330 may cover the entire upper surface of the first member 321.

Meanwhile, the electrode assembly may be electrically connected to the outside via the terminal portion 320. To this end, a predetermined hole 331 may be formed in the outer surface portion 330. In this embodiment, the outer surface of the first member 321 may be exposed to the outside through the hole 331. In this case, the portion exposed to the outside may be a region of the outer surface. Accordingly, the external terminal may be electrically connected to the terminal portion 320 by being inserted into the hole 331.

In this way, since the outer surface is covered by the outer surface portion 330 in this embodiment, it is possible to improve not only durability and coupling properties, but also insulation between the terminal portion and other configurations, and thermal propagation may be suppressed in a thermal runaway situation.

Furthermore, the terminal portion 320 made of a metal material is surrounded by the outer surface portion 330 and the connection portion 310 in this embodiment, so that the cap 300 may be easily manufactured by an insert injection process. Accordingly, the productivity of the secondary battery may be improved, the manufacturing process may be simplified, and the manufacturing cost may be reduced.

### Embodiment 4

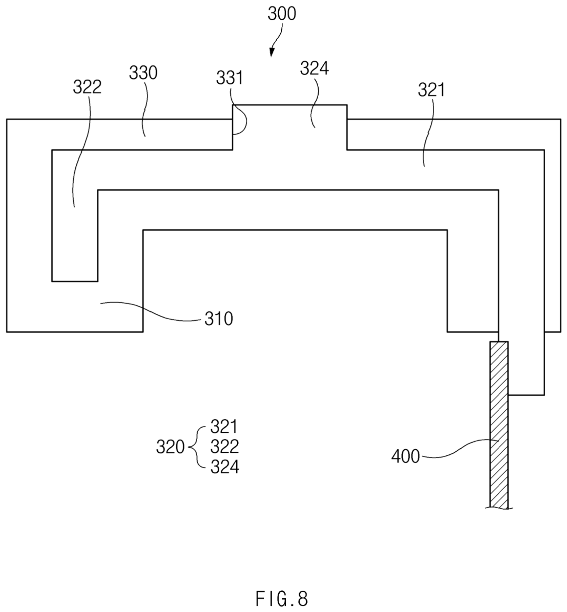

FIG. 8 is a cross-sectional view schematically showing a cap 300 and a busbar 400 of a secondary battery according to Embodiment 4 of the present disclosure. The connection portion 310, the terminal portion 320, the outer surface portion 330, the first member 321 and the second member 322 of the terminal portion 320 of the cap 300, and the busbar 400 according to this embodiment may be configured to be the same as the connection portion, the terminal portion, the outer surface portion, the first member and the second member of the terminal portion, and the busbar of Embodiment 3 shown in FIG. 7, respectively.

Referring to FIG. 8, the terminal portion 320 may further include a terminal member 324. In this embodiment, the terminal member 324 may extend from the first member 321. The terminal member 324 may penetrate the outer surface portion 330 to be exposed to the outside of the secondary battery.

In this embodiment, the terminal member 324 may penetrate the hole 331 of the outer surface portion 330. An end of the terminal member 324 may protrude outward from the outer surface portion 330. Accordingly, an external terminal may be electrically connected to the terminal member 324.

### Embodiment 5

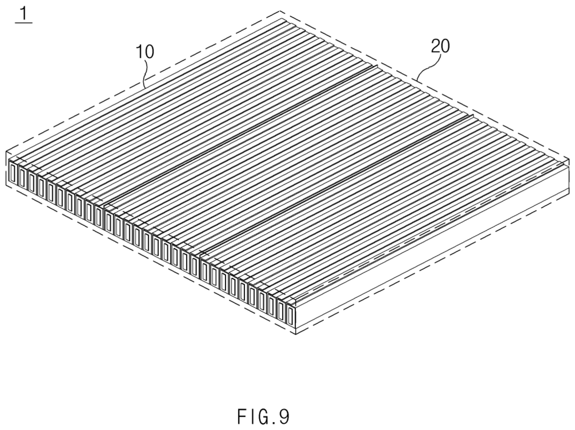

FIG. 9 is an exploded perspective view schematically showing a battery pack 1 according to Embodiment 5 of the present disclosure. The battery pack 1 according to Embodiment 5 of the present disclosure may include a plurality of secondary batteries 10. Additionally, the battery pack 1 may include a packaging 20 that accommodates the plurality of secondary batteries 10 therein. In this case, the secondary battery 10 may be a secondary battery according to any one of Embodiments 1 to 4 described above.

The packaging 20 may have various forms. For example, the packaging 20 may include a busbar electrically connected to the plurality of secondary batteries 10. Here, the packaging 20 may further include a busbar frame for fixing the busbar. The number of secondary batteries 10 accommodated inside the packaging 20 may vary depending on the battery pack 1.

The present disclosure has been hereinabove described with regard to a limited number of embodiments and drawings, but the present disclosure is not limited thereto and may be embodied in different forms by those having ordinary skill in the technical field pertaining to the present disclosure within the technical aspect of the present disclosure and the scope of the appended claims and their equivalents.

### [List of Reference Numerals]

1: Battery pack
10: Secondary battery
20: Packaging
100: Electrode assembly
200: Outer film
300, 300': Cap
310: Connection portion
320, 320': Terminal portion
321: First member
322: Second member
323: Third member
324: Terminal member
330: Outer surface portion
400, 400': Busbar
410: First metal portion
420: Second metal portion
430: Third metal portion
440: Fourth metal portion
500: Adhesive

## Claims

1. A secondary battery comprising:
an electrode assembly;
an outer film surrounding a portion of the electrode assembly; and
a cap covering the remainder of the electrode assembly,
wherein the cap comprises:
a connection portion coupled to the outer film;
a terminal portion partially embedded in the connection portion; and
an outer surface portion covering at least a portion of an outer surface of the terminal portion facing the outside of the electrode assembly.

2. The secondary battery according to claim 1,
wherein the terminal portion comprises:
a first member exposed to the outside of the connection portion; and
a second member extending from the first member toward the electrode assembly.

3. The secondary battery according to claim 2,
wherein the outer surface portion covers the outer surface of the first member.

4. The secondary battery according to claim 2,
wherein the second member is provided so that one end on the electrode assembly side is exposed to the inside of the connection portion.

5. The secondary battery according to claim 4, further comprising:
a busbar that is disposed between the terminal portion and the electrode assembly and connects one end of the second member exposed to the inside of the connection portion and the electrode assembly to each other.

6. The secondary battery according to claim 2,
wherein the second member extends from the side of the first member toward the electrode assembly and is embedded in the connection portion so as to be covered by the connection portion,
wherein the terminal portion further comprises a third member extending from the first member toward the electrode assembly and provided to penetrate the connection portion so as to be exposed to the inside of the connection portion.

7. The secondary battery according to claim 6, further comprising:
a busbar that is disposed between the terminal portion and the electrode assembly and connects the third member exposed to the inside of the connection portion and the electrode assembly to each other.

8. The secondary battery according to claim 7,
wherein the busbar comprises:
a first metal portion in contact with the third member; and
a second metal portion extending from the first metal portion toward the electrode assembly and having one end thereof connected to the electrode assembly.

9. The secondary battery according to claim 1,
wherein in the outer surface portion, a hole is formed so that the outer surface of the terminal portion may be exposed to the outside.

10. The secondary battery according to claim 1,
wherein the terminal portion comprises a terminal member penetrating the outer surface portion.

11. The secondary battery according to claim 10,
wherein an end of the terminal member protrudes outward from the outer surface portion.

12. The secondary battery according to claim 1,
wherein the terminal portion is disposed so that one surface thereof protrudes from one surface of the connection portion in a direction away from the electrode assembly.

13. The secondary battery according to claim 1,
wherein the terminal portion is at least partially embedded in the connection portion.

14. The secondary battery according to claim 13,
wherein the terminal portion comprises:
a first member exposed to the outside of the connection portion; and
a second member extending from the first member toward the electrode assembly and embedded in the connection portion.

15. A method for manufacturing the secondary battery, comprising:
a step of providing an electrode assembly comprising a positive electrode and a negative electrode;
a step of surrounding a portion of the electrode assembly with an outer film; and
a step of covering the remainder of the electrode assembly with a cap,
wherein the cap comprises:
a connection portion coupled to the outer film;
a terminal portion partially embedded in the connection portion; and
an outer surface portion covering at least a portion of an outer surface of the terminal portion facing the outside of the electrode assembly.

16. A battery pack comprising:
a plurality of secondary batteries according to claim 1; and
a packaging that accommodates the plurality of secondary batteries.
